(19) Europäisches Patentamt
European Patent Office
Office européen des brevets

(11) EP 4 326 002 A1

(12) EUROPEAN PATENT APPLICATION
published in accordance with Art. 153(4) EPC

(43) Date of publication:
21.02.2024 Bulletin 2024/08

(21) Application number: 22788085.3

(22) Date of filing: 31.03.2022

(51) International Patent Classification (IPC):
H05B 6/70 (2006.01)    H05B 6/72 (2006.01)
F24C 7/02 (2006.01)

(52) Cooperative Patent Classification (CPC):
F24C 7/02; H05B 6/70; H05B 6/72; Y02B 40/00

(86) International application number:
PCT/JP2022/016773

(87) International publication number:
WO 2022/220160 (20.10.2022 Gazette 2022/42)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.04.2021 JP 2021066875

(71) Applicant: Panasonic Intellectual Property
Management Co., Ltd.
Kadoma-shi, Osaka 571-0057 (JP)

(72) Inventors:
• KUBO, Masayuki
  Osaka 571-0057 (JP)
• OOMORI, Yoshiharu
  Osaka 571-0057 (JP)
• MAEDA, Kazuki
  Osaka 571-0057 (JP)

(74) Representative: SSM Sandmair
Patentanwälte Rechtsanwalt
Partnerschaft mbB
Joseph-Wild-Straße 20
81829 München (DE)

(54) **HIGH-FREQUENCY HEATING APPARATUS**

(57) A high-frequency heating apparatus includes a table, a high-frequency power generator, a transmission body, a radiation part, and an elevating drive mechanism. A heating target is to be placed on the table. The high-frequency power generator generates high-frequency power. The transmission body propagates the high-frequency power as surface waves. The radiation part is disposed on the transmission body and radiates the surface waves as high-frequency power. The elevating drive mechanism sets a distance between a top surface of the table or the heating target and the transmission body to not less than a predetermined distance so as to heat the heating target entirely by the high-frequency power. The elevating drive mechanism sets a distance between the top surface of the table or the heating target and the transmission body to not greater than the predetermined distance so as to partially brown the heating target by the surface waves.

FIG. 1

**Description**

TECHNICAL FIELD

The present disclosure relates to a high-frequency heating apparatus equipped with a surface wave line to propagate high-frequency power as surface waves.

BACKGROUND ART

PTL 1 discloses a high-frequency heating apparatus in which a surface wave line is arranged above a heating target. The high-frequency heating apparatus according to PTL 1 includes a heating chamber, a waveguide, a radio wave transmitter, a table for placing a heating target, and a stab-type surface wave line.

The above high-frequency heating apparatus has a plurality of protrusions inside the heating chamber. The table is disposed on one of the plurality of protrusions to adjust a distance between the heating target and the surface wave line according to a height of the heating target.

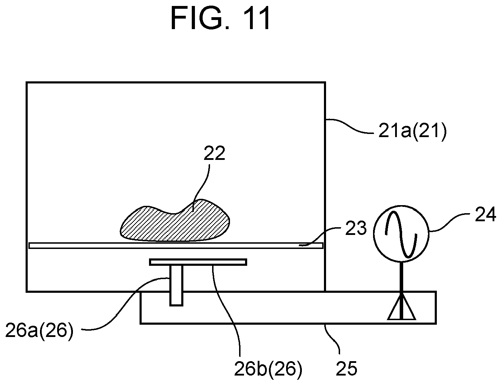

FIG. 11 is a schematic diagram illustrating a structure of a high-frequency heating apparatus adopting a normal rotary antenna power supply system. As illustrated in FIG. 11, this type of high-frequency heating apparatus includes heating chamber 21, high-frequency power generator 24, waveguide 25, and rotary antenna 26. Heating chamber 21 is formed by being surrounded by a metal wall, and has table 23 inside heating chamber 21. High-frequency power generator 24 is configured with magnetron to generate high-frequency power.

The high-frequency power passes through waveguide 25, shaft 26a of rotary antenna 26, and horizontal part 26b of rotary antenna 26, and is radiated to a space inside heating chamber 21 from a tip of rotary antenna 26. The high-frequency power applies induction heating to a heating target placed on table 23.

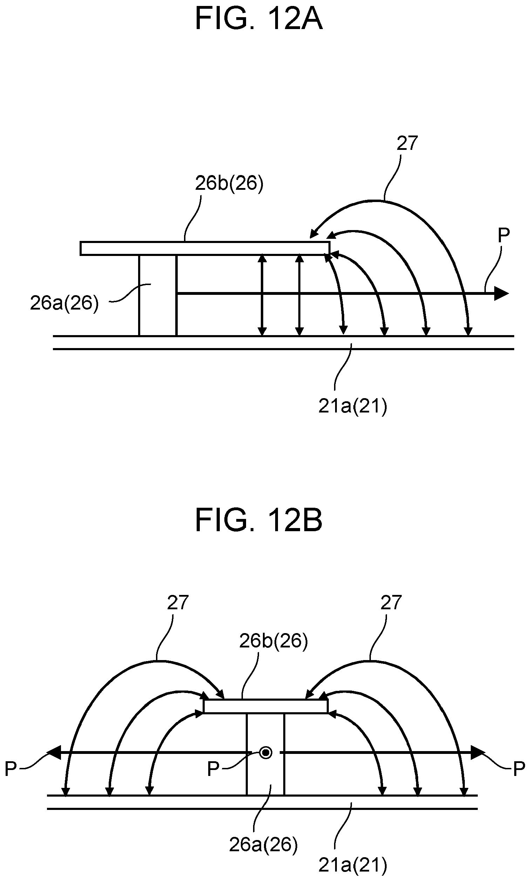

FIGS. 12A and 112B are schematic diagrams illustrating radiation of high-frequency power P in a conventional rotary antenna power supply system. As illustrated in FIG. 12A, high-frequency power P propagates as electric field 27 generated between horizontal part 26b and metal wall 21a, and is radiated from the tip of rotary antenna 26 in a direction that rotary antenna 26 is directed.

Citation List

Patent Literature

PTL 1: Unexamined Japanese Patent Publication No. S51-142141

SUMMARY OF THE INVENTION

FIG. 12B is a schematic diagram illustrating rotary antenna 26 in FIG. 12A seen in a radiation direction of high-frequency power P illustrated in FIG. 12A. As illustrated in FIG. 12B, a conventional rotary antenna power supply system has a certain space between horizontal part 26b and metal wall 21a.

Therefore, electric field 27 spreads in a horizontal direction centering on a direction to which rotary antenna 26 is directed. As a result, high-frequency power P is also radiated in a direction different from the direction to which rotary antenna 26 is directed. In other words, the high-frequency power is leaked.

With respect to radiation of high-frequency power from the vicinity of shaft 26a of rotary antenna 26, a radiation position scarcely moves although rotary antenna 26 is rotated. As a result, uneven heating occurs. Furthermore, leakage of the high-frequency power, as described above, reduces radiation power from rotary antenna 26. Accordingly, it is difficult to suppress uneven heating.

The present disclosure provides a high-frequency heating apparatus configured to apply induction heating to a heating target by high-frequency power propagated as surface waves to a radiation part and then radiated from the radiation part.

A high-frequency heating apparatus according to an exemplary embodiment of the present disclosure includes a table, a high-frequency power generator, a transmission body, and a radiation part. A heating target is to be placed on the table. The high-frequency power generator generates high-frequency power. The transmission body propagates the high-frequency power as surface waves. The radiation part is disposed on the transmission body and radiates the surface waves as high-frequency power.

The above high-frequency heating apparatus is capable of supplying the high-frequency power to the radiation part by using a surface wave line that does not cause leakage of the high-frequency power. Still more, the high-frequency power can be radiated from a height appropriate for heating food. As a result, various heating targets can be heated to a desired state.

BRIEF DESCRIPTION OF DRAWINGS

FIG. 1 is a schematic diagram illustrating a structure of a high-frequency heating apparatus according to a first exemplary embodiment of the present disclosure.

FIG. 2 is a schematic perspective view illustrating a transmission body according to the first exemplary embodiment.

FIG. 3 is a diagram illustrating distribution of high-frequency current and electric field in stabs of the transmission body.

FIG. 4 is a magnified perspective view of the transmission body illustrating a radiation part disposed at an end of the transmission body.

FIG. 5 is a schematic diagram illustrating a structure of a high-frequency heating apparatus according to a second exemplary embodiment of the present disclosure.

FIG. 6 is a schematic diagram illustrating a structure of a high-frequency heating apparatus according to a third exemplary embodiment of the present disclosure.

FIG. 7 is a schematic diagram illustrating a structure of the high-frequency heating apparatus according to the third exemplary embodiment in a state that a table is at the lowest position.

FIG. 8 is a schematic diagram illustrating a heating effect near a heating target in FIG. 7.

FIG. 9 is a schematic diagram illustrating a structure of the high-frequency heating apparatus according to the third exemplary embodiment in a state that the table is at a position higher than the state in FIG. 7.

FIG. 10 is a schematic diagram illustrating a heating effect near a heating target in FIG. 9.

FIG. 11 is a schematic diagram illustrating a structure of a conventional high-frequency heating apparatus employing a rotary antenna.

FIG. 12A is a schematic diagram illustrating radiation of high-frequency power in a power supply system employing the rotary antenna in FIG. 11.

FIG. 12B is a schematic diagram illustrating radiation of high-frequency power in the power supply system employing the rotary antenna in FIG. 11.

DESCRIPTION OF EMBODIMENT

(Basic knowledge behind the present disclosure)

When the inventors arrived at the present disclosure, a technique for heating a heating target using high-frequency power propagated as surface waves has been known as a technique for partially heating the heating target.

The inventors have reached an idea of using surface waves for heating the heating target entirely and not only for partial heating of the heating target. The inventors have then realized a problem that it is necessary to supply high-frequency power to a portion of the heating target far from a surface wave line that is difficult to be heated by surface waves. To solve the problem, the inventors have reached a subject matter of the present disclosure.

To suppress uneven heating of the heating target, high-frequency power is preferably radiated from a plurality of appropriate positions. However, in the conventional power supply system, the high-frequency power is radiated from positions other than intended positions due to leakage of the high-frequency power during propagation. As a result, uneven heating cannot be sufficiently suppressed.

A high-frequency heating apparatus according to an exemplary embodiment of the present disclosure includes a table, a high-frequency power generator, a transmission body, and a radiation part. A heating target is to be placed on the table. The high-frequency power generator generates high-frequency power. The transmission body propagates the high-frequency power as surface waves. The radiation part is disposed on the transmission body and radiates the surface waves as high-frequency power.

Hereinafter, exemplary embodiments of the present disclosure will be described with reference to the drawings. In the exemplary embodiments, description of known issues and duplicate description of identical or substantially identical structure may be omitted.

(First exemplary embodiment)

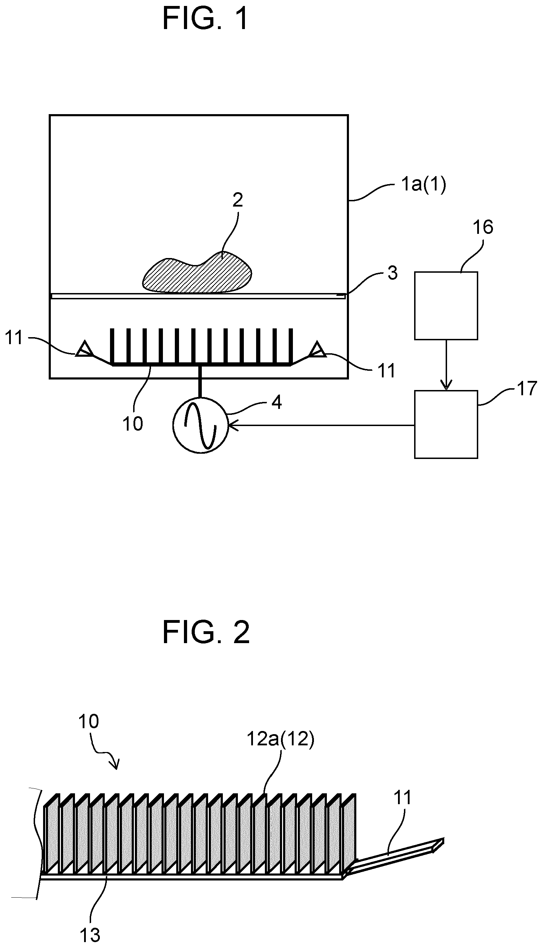

A first exemplary embodiment of the present disclosure will be described below with reference to FIGS. 1 to 4.

[Overall structure]

FIG. 1 is a schematic diagram illustrating a structure of a high-frequency heating apparatus according to the first exemplary embodiment. As illustrated in FIG. 1, the high-frequency heating apparatus according to the first exemplary embodiment includes heating chamber 1, high-frequency power generator 4, transmission body 10, radiation part 11, setting unit 16, and controller 17.

Heating chamber 1 is surrounded by metal wall 1a, and table 3 is provided inside heating chamber 1. Heating target 2 is placed on table 3. High-frequency power generator 4 is a magnetron, a semiconductor oscillator, or the like that is configured to generate high-frequency power.

Transmission body 10 is a surface wave line having two radiation parts 11 arranged at its both ends. The high-frequency power propagates in transmission body 10 toward each of radiation parts 11. Radiation parts 11 are arranged at positions appropriate for suppressing uneven heating, and function as antennas that radiate the high-frequency power in heating chamber 1.

A user can set heating output and select an auto-cooking menu via setting unit 16. Controller 17 controls high-frequency power generator 4, based on heating conditions such as the heating output set and a cooking menu selected, to control heating of heating target 2. The heating conditions may include type, size, and placement position of heating target 2.

[Transmission body]

FIG. 2 is a schematic perspective view illustrating transmission body 10 according to the first exemplary embodiment. Transmission body 10 includes periodic structure 12 and joint 13. A plurality of plate-like stabs 12a is periodically arranged in periodic structure 12. In other words, the plurality of stabs 12a is arranged in parallel to each other at regular intervals in periodic structure 12. One end of each of the plurality of stabs 12a is electrically and mechanically coupled to joint 13. Radiation part 11 is connected to joint 13.

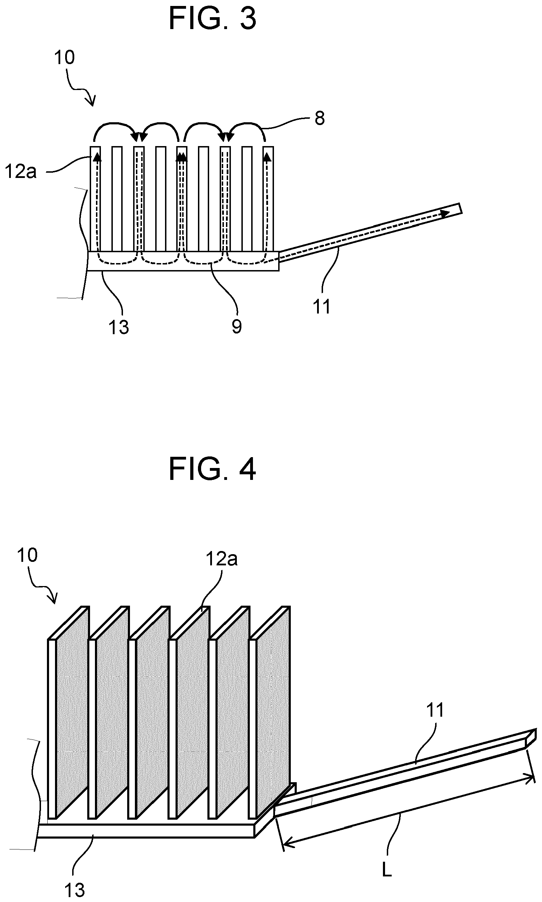

FIG. 3 is a diagram illustrating distribution of high-frequency current and electric filed in stabs 12a. Transmission body 10 propagates the high-frequency power as surface waves. FIG. 3 illustrates high-frequency current 9 that flows through stabs 12a and joint 13 at a certain instant.

As illustrated in FIG. 3, transmission body 10 repeatedly generates high-frequency current 9 that flows through a passage (one dotted arrow) from a tip of one stab 12a to a tip of another stab 12a via joint 13. In this way, the high-frequency power, which is surface waves, propagates in transmission body 10. This passage has a length of about 1/2 of wavelength $\lambda$ of the high-frequency power, so that the high-frequency power can be efficiently propagated in a resonant state.

When high-frequency current 9 flows, electric field 8 (solid arrow) is generated around tips of stabs 12a. Electric field 8 is concentrated between a start and end of the passage (one dotted arrow) of high-frequency current 9. Since a distance between tips of two adjacent stabs 12a is short, electric field 8 concentrates on the vicinity of the tips of stabs 12a without being diffused into space.

Accordingly, transmission body 10 suppresses radiation and leakage of the high-frequency power to efficiently propagate the high-frequency power. As a result, uneven heating can be suppressed.

[Radiation part]

Radiation part 11 is a monopole antenna connected to joint 13 of transmission body 10. Joint 13 is located at approximately a halfway of the passage of high-frequency current 9 propagating as surface waves, and thus a current distribution is large at joint 13, which is suitable for excitation of the antenna.

By connecting radiation part 11 to joint 13 of transmission body 10, the high-frequency current flowing to radiation part 11, which is the antenna, can be increased.

As illustrated in FIGS. 2 and 3, radiation part 11 has a plate-like shape in the first exemplary embodiment. However, radiation part 11 may also have other shapes such as a bar-like, cylindrical, and cuboid shapes.

FIG. 4 is a magnified perspective view of transmission body 10 illustrating radiation part 11 disposed at the end of transmission body 10. Radiation part 11 performs impedance matching between transmission body 10 and a space inside heating chamber 1. When transmission body 10 has impedance lower than that in the space, length L (FIG. 4) of radiation part 11 satisfies Formula (1) below to achieve impedance matching.

$$L \doteqdot \lambda/4 + \lambda/2 \times n \ (n \text{ is integer of } 0 \text{ or more}) \qquad (1)$$

As illustrated in FIG. 3, each of two radiation parts has a slope portion that is tilted upward with respect to transmission body 10, so that a tip of radiation part 11 is closer to the space inside heating chamber 1 than joint 13. This structure enables to direct a radiation range of the high-frequency power from the tip of radiation part 11 toward the space inside heating chamber while retaining the impedance matching.

In the first exemplary embodiment, length L of radiation part 11 is expressed by Formula (1) above. Radiation part 11 thus functions as a λ/4 impedance transformer. Length L of radiation part 11 is adjusted within a range of about ±λ/12. In other words, length L of the radiation part may satisfy Formula (2) below whereas λ is the wavelength of high-frequency power and n is integer of 0 or more.

$$L = \lambda/4 + \lambda/2 \times n \pm \lambda/12 \qquad (2)$$

This adjustment is performed based on impedance at a position where radiation part 11 is coupled to transmission body and impedance of the space to which the high-frequency power is radiated from the tip of radiation part.

Accordingly, accurate impedance matching can be achieved between transmission body 10 and the space inside heating chamber 1. Impedance matching can be optimized by suppressing reflection between transmission body 10 and radiation part 11 and between radiation part 11 and the space inside heating chamber 1.

As a result, high-frequency radiation toward the space inside heating chamber 1 can be maximized. Optimized impedance matching can reduce reflection at the tip of radiation part 11 and maximize radiation of the high-frequency power into heating chamber 1.

(Second exemplary embodiment)

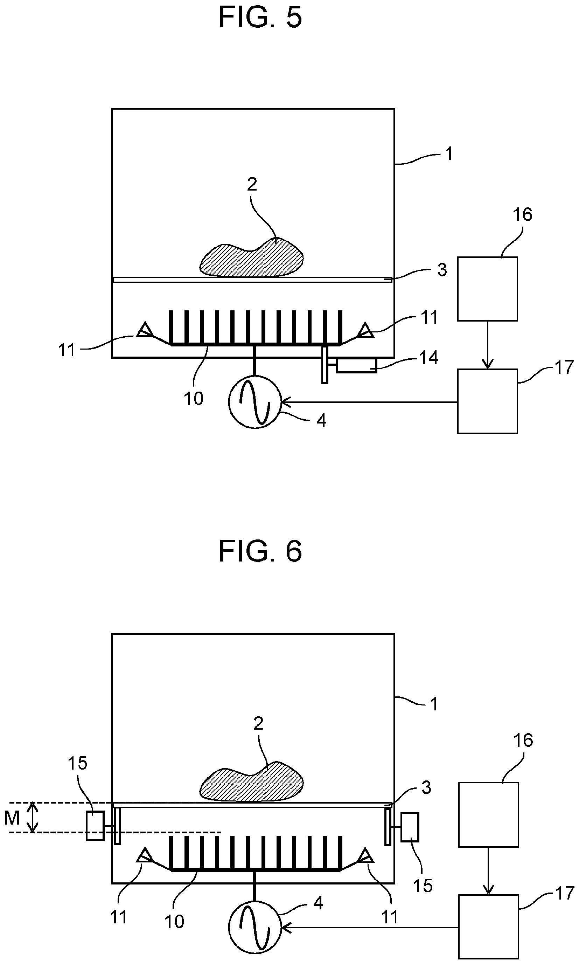

A second exemplary embodiment of the present disclosure is described with reference to FIG. 5. Components of the second exemplary embodiment that are same or substantially the same as the first exemplary embodiment are give the same reference marks to omit duplicate description.

[Rotary drive mechanism]

FIG. 5 is a schematic diagram illustrating a structure of a high-frequency heating apparatus according to the second exemplary embodiment. As illustrated in FIG. 5, the high-frequency heating apparatus according to the second exemplary embodiment is equipped with rotary drive mechanism 14 including a motor.

Rotary drive mechanism 14 rotates transmission body 10 and radiation part 11 in parallel with table 3, centering on a coupled portion of high-frequency power generator 4 and transmission body 10. In this structure, radiation part 11 can be directed and retained for certain time in a direction corresponding to a placement position of a heating target in addition to simply rotating transmission body 10 and radiation part 11 at a fixed speed. As a result, the high-frequency power can be intensively radiated toward a portion of heating target that requires strong heating.

The placement position of the heating target may be input by the user via setting unit 16, or may be detected by a temperature sensor (not illustrated) for detecting a temperature inside heating chamber 1.

Next, a specific operation and effect of rotary drive mechanism 14 will be described. First, the user places heating target 2 on table 3, and selects a cooking menu via setting unit 16. The user may input type and size of heating target 2 via setting unit 16.

Controller 17 controls rotary drive mechanism 14 so as to set a direction, a rotating speed, and the like of radiation part 11according to the cooking menu selected and heating conditions such as the type and size of heating target 2. Then, controller 17 performs heating according to the cooking menu selected.

In the second exemplary embodiment, rotary drive mechanism 14 rotates transmission body 10 and radiation part 11. However, rotary drive mechanism 14 may rotate table 3.

(Third exemplary embodiment)

A third exemplary embodiment of the present disclosure will be described below with reference to FIGS. 6 to 10.

[Elevating drive mechanism]

FIG. 6 is a schematic diagram illustrating a structure of a high-frequency heating apparatus according to the third exemplary embodiment. As illustrated in FIG. 6, the high-frequency heating apparatus according to the third exemplary embodiment is equipped with elevating drive mechanism 15 including a motor. Elevating drive mechanism 15 moves table 3 up and down to change a distance between radiation part 11 and table 3. This structure can suppress uneven heating in a vertical direction of heating target 2.

Next, a specific operation and effect of elevating drive mechanism 15 will be described. First, the user places heating target 2 on table 3, and selects a cooking menu via setting unit 16. The user may input type and size of heating target 2 via setting unit 16.

Controller 17 controls elevating drive mechanism 15 so as to determine a distance between transmission body 10 and a top surface of table 3 or heating target 2 according to the cooking menu selected and heating conditions such as the type and size of heating target 2. In other words, controller 17 causes elevating drive mechanism 15 to move table 3 up and down to a height according to the distance determined.

Controller 17 may also cause elevating drive mechanism 15 to change the height of transmission body 10 as time passes while one heating target 2 is heated. With this structure, a distance between transmission body 10 and heating target 2 (hereinafter referred to as distance M) can be adjusted to perform partial baking and entire heating of heating target 2 as appropriate.

Partial baking denotes strong partial heating of heating target 2 to brown a portion of heating target 2. The portion of heating target 2 denotes a portion of heating target 2 closest to table 3, which is a bottom surface of heating target 2. Entire heating denotes uniform heating of entire heating target 2.

Controller 17 determines whether to execute partial baking or entire heating according to the cooking menu selected via setting unit 16. More specifically, for partial baking, controller 17 sets distance M to less than a predetermined distance. For entire heating, controller 17 sets distance M to equal to or greater than the predetermined distance.

The predetermined distance is a distance for partial baking by the electric field concentrated on the vicinity of the tips of stabs 12a when distance M is set to a distance equal to or less than the predetermined distance.

When distance M is set to a distance equal to or greater than the predetermined distance, the high-frequency power propagates on transmission body 10 as surface waves. The high-frequency power is thus supplied to radiation part 11 without leakage, so that the high-frequency power can be radiated from an optimal position for entire heating. As a result, various heating targets can be entirely heated to a desired state.

As described above, the heating target can be heated to the desired state by adjusting distance M using elevating drive mechanism 15.

In the third exemplary embodiment, elevating drive mechanism 15 moves table 3 up and down. However, elevating drive mechanism 15 may move transmission body 10 and radiation part 11 up and down.

[When table and surface wave transmission body are close]

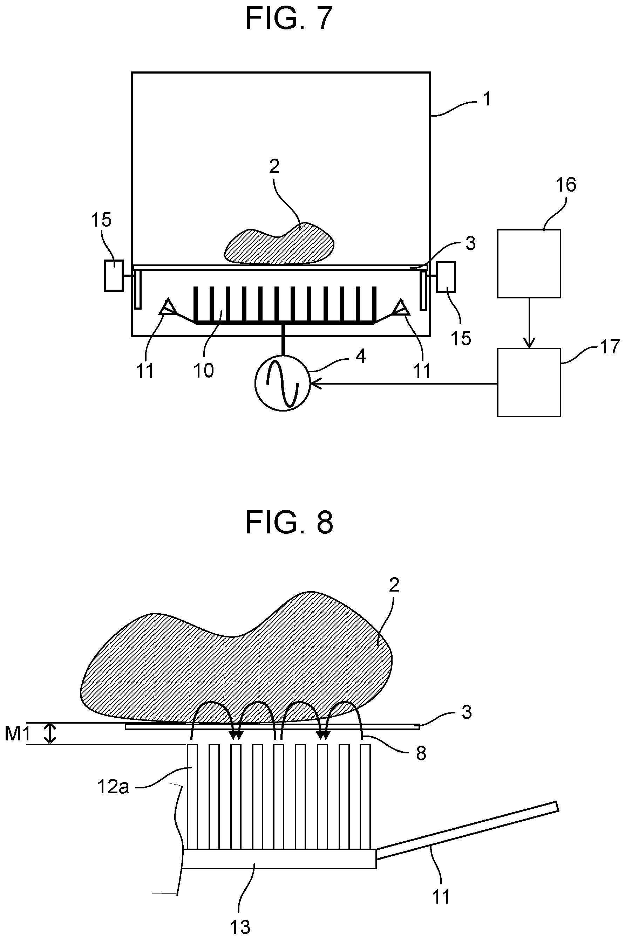

FIG. 7 is a schematic diagram illustrating a structure of the high-frequency heating apparatus according to the third exemplary embodiment in a state that table 3 is at the lowest position.

FIG. 8 is a schematic diagram illustrating the vicinity of heating target 2 in FIG. 7. A heating effect when transmission body 10 is close to heating target 2 will be described with reference to FIG. 8. As an example, distance M1 is 5 mm. This value is equivalent to about 1/24 of wavelength $\lambda$ of 2.45-GHz high-frequency power.

As illustrated in FIG. 8, electric field 8 intensively generated near the tips of stabs 12a performs heating of heating target 2 when the tips of stabs 12a are close to heating target 2. Accordingly, heating target 2 is strongly heated and baked to brown a bottom of heating target 2. In this case, small high-frequency energy is supplied to radiation part 11, and therefore entire heating of heating target 2 by radiation of the high-frequency power from radiation part 11 is weak.

Now, specific values of distance M will be described. The electric field and an electric field range generated near the surface wave line differ depending on various conditions including type of surface wave line, design related to concentration of high-frequency power, and a frequency and power value of high-frequency power. Therefore, a heating experiment has been performed using surface waves applied to a plurality of types of food.

As a result, it is revealed that food is browned at distance M of about 5 mm in the case of 500-W high-frequency power for home use.

[When table and surface wave transmission body are far]

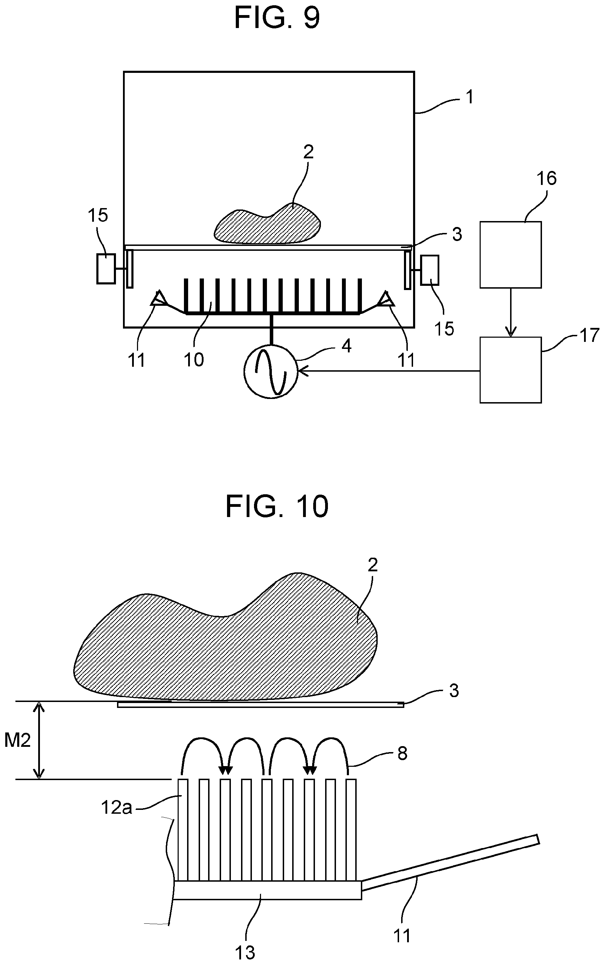

FIG. 9 is a schematic diagram illustrating a structure of the high-frequency heating apparatus according to the third exemplary embodiment in a state that table 3 is at a position higher than the position in FIG. 7.

FIG. 10 is a schematic diagram illustrating the vicinity of heating target 2 in FIG. 9. A heating effect when transmission body 10 is far from heating target 2, compared with the state in FIG. 8, will be described with reference to FIG. 10. As an example, distance M2 is 15 mm. This value is equivalent to about 1/8 of wavelength $\lambda$ of 2.45-GHz high-frequency power.

As illustrated in FIG. 10, since electric field 8 is concentrated on the vicinity of the tips of stabs 12a, heating target 2 is scarcely heated by electric field 8 when the tips of stabs 12a are far from heating target 2. Therefore, transmission body 10 can transmit the high-frequency power to radiation part 11 without any power loss. As a result, radiation of the high-frequency power from radiation part 11 applies entire heating stronger than that in FIG. 8 to heating target 2.

As described above, the heating experiment has been performed using surface waves on the plurality of types of food. As a result, it is revealed that food is partially heated without browning at distance M of about 10 mm using the 500-W high-frequency power for home use.

Still more, when distance M is set to 15 mm or more, absorption of the high-frequency power, which is surface waves, by heating target 2 during propagation in the surface wave line can be suppressed. In this case, entire heating is achieved.

As described above, controller 17 adjusts distance M to perform one of entire heating, heating with browning, and partial heating without browning of heating target 2 as appropriate.

More specifically, when distance M is set to 15 mm or more, uneven heating can be suppressed by performing entire heating. When distance M is set to 5 mm or less, heating with browning can be performed to make partial browning on food. When distance M is greater than 5 mm and not greater than 10 mm, partial heating without browning can be performed.

In the third exemplary embodiment, the above predetermined distance is preferably 5 mm (i.e., 1/24 of wavelength λ) or more and 15 mm (i.e., 1/8 of wavelength λ) or less. However, values (5 mm, 10 mm, and 15 mm) for distance M are examples and not limited thereto.

In the third exemplary embodiment, distance M is a distance between the bottom surface of heating target 2, more accurately a top surface of table 3 where the bottom surface of heating target 2 contacts, and the tips of stabs 12a of transmission body 10.

(Other exemplary embodiments)

A degree of concentration of electric field 8 near the tips of stabs 12a is related to a frequency of propagating high-frequency power. Therefore, controller 17 controls high-frequency power generator 4 to adjust the frequency of high-frequency power so as to perform entire heating, heating with browning, or partial heating of heating target 2 as appropriate.

In other words, the predetermined distance may not necessarily be set to between 5 mm and 15 mm inclusive. The setting can be changed as appropriate.

To adjust the distance between transmission body 10 and table 3 or heating target 2, transmission body 10 may be moved up and down without moving table 3 up and down as in the third exemplary embodiment.

For example, when heating target 2 is placed in a container such as a dish and heating target 2 is away from table 3, an appropriate range of the predetermined distance may not be between 5 mm and 15 mm inclusive. In this case, controller 17 adjusts the predetermined distance as appropriate so as to heat heating target 2 to a desired state.

In the above case, to adjust the appropriate range of the predetermined distance, the user may input information that heating target 2 is in the container via setting unit 16. Alternatively, a height of heating target 2 may be detected by an optical sensor.

In the first to third exemplary embodiments, transmission body 10 includes periodic structure 12 in which the plurality of plate-like stabs 12a is periodically arranged and joint 13 to which one end of each of the plurality of stabs 12a is electrically and mechanically connected. However, transmission body 10 may have a different form.

For example, the surface wave line may have a flat sheet structure with periodic structure. Periodic structure 12 may be a ladder, meander, or inter-digital type. The use of the flat sheet structure can downsize the high-frequency heating apparatus. Thus, transmission body 10 can be further easily rotated and moved vertically.

(Effect)

As described above, according to the exemplary embodiments described above, the high-frequency power can be supplied to radiation part 11 by using the surface wave line with no leakage of the high-frequency power. In addition, the high-frequency power can be radiated from the optimum height for heating food. As a result, various types of heating target 2 can be heated to a desired state.

In the high-frequency heating apparatus according to the above exemplary embodiments, distance M between transmission body 10 and the top surface of table 3 or heating target 2 may be set to not less than the predetermined distance. In this case, the high-frequency power propagates in transmission body 10 as surface waves and is supplied to radiation part 11 without leakage of the high-frequency power. Accordingly, the high-frequency power can be radiated from the position optimum for entire heating. As a result, various types of heating target can be heated to a desired state.

In the high-frequency heating apparatus according to the above exemplary embodiments, distance M between transmission body 10 and the top surface of table 3 or heating target 2 may be set to not greater than the predetermined distance. In this case, partial baking of heating target 2 can be performed.

According to the above exemplary embodiments, entire heating, partial baking, or partial heating can be performed on the heating target as appropriate by adjusting distance M between transmission body 10 and the top surface of table 3 or heating target 2 according to the heating conditions.

In the high-frequency heating apparatus according to the above exemplary embodiments, the predetermined distance may be between 5 mm and 15 mm inclusive. The predetermined distance may also be between 1/24 or more of wavelength λ and 1/8 or less of wavelength λ of the high-frequency power.

In the high-frequency heating apparatus according to the above exemplary embodiments, radiation part 11 is disposed at the end of transmission body 10 and may have a sloped portion tilted with respect to transmission body 10. Accordingly, the radiation range of the high-frequency power from the tip of radiation part 11 can be directed to the space inside heating chamber 1 while retaining impedance matching.

In the high-frequency heating apparatus according to the above exemplary embodiments, the sloped portion may be tilted toward table 3. Accordingly, the radiation range of the high-frequency power from the tip of radiation part 11 can be directed to the space inside heating chamber 1 while retaining impedance matching.

In the high-frequency heating apparatus according to the above exemplary embodiments, the direction of radiation part 11 may be changed according to the placement position of heating target 2. Heating target 2 can be heated to a desired state by radiating the high-frequency power toward the placement position of heating target 2.

In the high-frequency heating apparatus according to the above exemplary embodiments, length L of the radiation part may satisfy Formula (2) below whereas λ is the wavelength of high-frequency power and n is integer of 0 or more.

$$L = \lambda/4 + \lambda/2 \times n \pm \lambda/12 \qquad (2)$$

This achieves impedance matching between transmission body 10 and the space inside heating chamber 1. As a result, reflection can be suppressed to improve the radiation efficiency.

In the high-frequency heating apparatus according to the above exemplary embodiments, impedance of the radiation part may be adjusted to match impedance of the space to be radiated. By performing impedance matching of the radiation part, reflection by a radiated portion can be suppressed to improve the radiation efficiency.

In the high-frequency heating apparatus according to the above exemplary embodiments, controller 17 may control the high-frequency power by high-frequency power generator to change the frequency. Accordingly, the concentration of surface waves on transmission body 10 can be controlled to change a strength and range of the electric field distributed. As a result, a heating strength and range of heating target 2 can be controlled.

In the high-frequency heating apparatus according to the above exemplary embodiments, impedance of the transmission body may match impedance of the space inside heating chamber 1 by the radiation part. Accordingly, reflection by the radiation part can be suppressed to improve the radiation efficiency.

INDUSTRIAL APPLICABILITY

The high-frequency heating apparatus according to the present disclosure is applicable to home-use cooking appliances.

REFERENCE MARKS IN THE DRAWINGS

1     heating chamber
1a    metal wall
2     heating target
3     table
4     high-frequency power generator
8     electric field
9     high-frequency current
10    transmission body
11    radiation part
12    periodic structure
12a   stab
13    joint
14    rotary drive mechanism
15    elevating drive mechanism
16    setting unit
17    controller
21    heating chamber
21a   metal wall

| 22 | heating target |
| 23 | table |
| 24 | high-frequency power generator |
| 25 | waveguide |
| 26 | rotary antenna |
| 26a | shaft |
| 26b | horizontal part |
| 27 | electric field |

**Claims**

1. A high-frequency heating apparatus comprising:

   a table on which a heating target is to be placed;
   a high-frequency power generator configured to generate high-frequency power;
   a transmission body configured to propagate the high-frequency power as a surface wave; and
   a radiation part disposed on the transmission body and configured to radiate the surface wave as high-frequency power.

2. The high-frequency heating apparatus according to claim 1, further comprising:

   an elevating drive mechanism configured to move the table up and down; and
   a controller configured to control the elevating drive mechanism, wherein
   the controller causes the elevating drive mechanism to set a distance between a top surface of the table or the heating target and the transmission body to not less than a predetermined distance so as to perform entire heating on the heating target by the high-frequency power, the entire heating entirely heating the heating target.

3. The high-frequency heating apparatus according to claim 2, wherein
   the controller causes the elevating drive mechanism to set a distance between the top surface of the table or the heating target and the transmission body to not greater than the predetermined distance so as to perform partial baking on the heating target by the surface wave, the partial baking browning a portion of the heating target.

4. The high-frequency heating apparatus according to claim 3, further comprising a setting unit configured to enable a user to set a heating condition, wherein
   the controller causes the elevating drive mechanism to set, according to the heating condition, a distance between the transmission body and the heating target to not greater than the predetermined distance so as to perform the partial baking, and the distance between the transmission body and the heating target to not less than the predetermined distance so as to perform the entire heating.

5. The high-frequency heating apparatus according to any one of claims 2 to 4,
   wherein the predetermined distance ranges from 5 mm to 15 mm inclusive.

6. The high-frequency heating apparatus according to any one of claims 2 to 4,
   wherein the predetermined distance ranges from 1/24 to 1/8 inclusive of a wavelength of the high-frequency power.

7. The high-frequency heating apparatus according to claim 1, wherein the radiation part includes a sloped portion tilted with respect to the transmission body, the sloped portion being provided at a tip of the radiation part.

8. The high-frequency heating apparatus according to claim 7, wherein the sloped portion is tilted toward the table.

9. The high-frequency heating apparatus according to claim 1, further comprising a rotary drive mechanism configured to rotate the transmission body, wherein
   the controller causes the rotary drive mechanism to change a direction of the radiation part according to a placement position of the heating target.

10. The high-frequency heating apparatus according to claim 1, wherein length L of the radiation part satisfies a formula below:

$$L = \lambda/4 + \lambda/2 \times n \pm \lambda/12,$$

whereas $\lambda$ is a wavelength of the high-frequency power and n is an integer of 0 or more.

11. The high-frequency heating apparatus according to claim 2, wherein the controller causes the high-frequency power generator to adjust a frequency of the high-frequency power.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

21a(21)

22

23

24

26a(26)

26b(26)

25

# FIG. 12A

# FIG. 12B

## INTERNATIONAL SEARCH REPORT

| International application No. |
| --- |
| **PCT/JP2022/016773** |

**A. CLASSIFICATION OF SUBJECT MATTER**

*H05B 6/70*(2006.01)i; *H05B 6/72*(2006.01)i; *F24C 7/02*(2006.01)i
FI: H05B6/72 C; H05B6/70 A; F24C7/02 511A

According to International Patent Classification (IPC) or to both national classification and IPC

**B. FIELDS SEARCHED**

Minimum documentation searched (classification system followed by classification symbols)

H05B6/70; H05B6/72; F24C7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2020-161348 A (PANASONIC INTELLECTUAL PROPERTY MANAGEMENT CO., LTD.) 01 October 2020 (2020-10-01) paragraphs [0029], [0040], fig. 1 | 1 |
| Y | | 2-6, 11 |
| A | | 7-10 |
| Y | JP 2020-64705 A (PANASONIC INTELLECTUAL PROPERTY MANAGEMENT CO., LTD.) 23 April 2020 (2020-04-23) paragraph [0045], fig. 6 | 2-6, 11 |
| Y | JP 2018-152245 A (FUJITSU LIMITED) 27 September 2018 (2018-09-27) paragraph [0018] | 2-6, 11 |
| A | WO 2019/194098 A1 (PANASONIC INTELLECTUAL PROPERTY MANAGEMENT CO., LTD.) 10 October 2019 (2019-10-10) fig. 1, 6 | 7-8 |
| A | JP 7-161471 A (MATSUSHITA ELECTRIC IND CO LTD) 23 June 1995 (1995-06-23) paragraph [0016], fig. 1 | 9 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 April 2022** | **17 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

<table>
<tr><td colspan="3"></td><td>International application No.<br>**PCT/JP2022/016773**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| Y | WO 2018/003546 A1 (PANASONIC INTELLECTUAL PROPERTY MANAGEMENT CO., LTD.) 04 January 2018 (2018-01-04)<br>paragraphs [0031], [0036] | 11 |

Form PCT/ISA/210 (second sheet) (January 2015)

**INTERNATIONAL SEARCH REPORT**
Information on patent family members

International application No.

**PCT/JP2022/016773**

| Patent document cited in search report | | | Publication date (day/month/year) | Patent family member(s) | | | Publication date (day/month/year) |
|---|---|---|---|---|---|---|---|
| JP | 2020-161348 | A | 01 October 2020 | (Family: none) | | | |
| JP | 2020-64705 | A | 23 April 2020 | (Family: none) | | | |
| JP | 2018-152245 | A | 27 September 2018 | WO paragraph [0018] | 2018/168194 | A1 | |
| WO | 2019/194098 | A1 | 10 October 2019 | EP fig. 1, 6 CN | 3780909 111066375 | A1 A | |
| JP | 7-161471 | A | 23 June 1995 | (Family: none) | | | |
| WO | 2018/003546 | A1 | 04 January 2018 | EP paragraphs [0031], [0036] CN | 3481149 109315029 | A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S51142141 A